# EUROPEAN PATENT APPLICATION

(11) **EP 4 637 216 A1**
(43) Date of publication of application: **22.10.2025**
(21) Application number: 24171184.5
(22) Date of filing: 19.04.2024
(51) Int. Cl.: H04W 48/18, H04W 48/16, H04W 84/06

(54) **QOS-TRIGGERED NETWORK SELECTION OR RESELECTION**

(71) Applicant: Deutsche Telekom AG, 53113 Bonn (DE)
(72) Inventor: BISCHINGER, Kurt, 1120 Wien (AT)
(74) Representative: 2SPL Patentanwälte PartG mbB

(57) **Abstract**

Provided is a concept for selecting a new mobile communication network based on a Quality of Service (QoS) requirement of a service desired by a UE which is currently registered with a current mobile communication network which cannot meet the QoS requirement.

## Description

### Field

The present disclosure generally relates to network (re-) selection in mobile communication networks, and, more particularly to Quality of Service (QoS-) triggered network (re-) selection.

### Background

After switching on, a User Equipment (UE) may select the highest-priority mobile communication network available and may then carry out periodic scans in idle mode to find a higher-priority network and switch to it if necessary. That is, upon powering up, the UE may search for available mobile communication networks. It may select the mobile communication network based on a set of predefined criteria, which may include factors like network priority, previously used networks, and networks specified in the SIM card's preferred network list. Priority of networks can be defined by the network operators and might be influenced by factors such as roaming agreements, the strength and quality of the signal, and the type of technology available (e.g., 5G vs. 4G).

Mobile network operators have the capability to configure various parameters on the UE via the network. This includes settings like how frequently the device should scan for other mobile communication networks when in idle mode. These settings may be dictated by both the technical capabilities of the network and expected mobility patterns of users. For instance, in areas where network coverage is highly variable, or for users who frequently move between different network areas, more frequent scanning might be necessary. Adjusting the scanning interval is a trade-off between battery life of the UE and the need for optimal network connectivity. More frequent scanning can lead to faster battery drain, which is why operators might set longer intervals under certain conditions. On the network side, managing the number of devices that are frequently scanning and attempting to switch networks helps reduce signaling traffic and load on network resources, which can improve overall network efficiency. The period for the scans can be set by the home network operator in the range from 6 minutes to 8 hours, or for certain device types between 2 hours and 240 hours, for example.

So far, it can be assumed that 4G and 5G networks (e.g., PLMNs, Public Land Mobile Networks) normally support a Quality of Service (QoS) required for most services, especially telephony (e.g., VoIMS, Voice over IP Multimedia Subsystem). This means that there is only a need to change a selected network if the coverage deteriorates significantly or for business reasons.

Since 5G, satellite networks with 5G NR (New Radio) access have also been increasingly integrated into 5G networks - initially only for messages and IoT (Internet of Things) data transmission, but now also for voice telephony. Although LEO (Low Earth Orbit) and MEO (Medium Earth Orbit) satellites may meet the necessary QoS requirements in terms of latency and data transmission rate, they are not continuously available. Due to the constellation, there may be regular interruptions in coverage, e.g. coverage for 20 minutes, then interruption for 40 minutes, then coverage again for 20 minutes, etc. With GEO (Geostationary Earth Orbit) networks, on the other hand, coverage is constant, but throughput and latency may be significantly worse than with LEO or MEO.

In future, a UE (e.g., on the high seas) could therefore be deployed with a LEO satellite network as the highest-priority mobile communication network and a GEO satellite network as a lower-priority mobile communication network. If a UE loses the connection to the LEO network, it may select the GEO network as a fallback. If a service is now started, the network may request a data transmission with certain QoS parameters. For simple data transmission, this may be a so-called "best effort" service, which may also be available on GEO network. However, if the service is VoIMS, a conversational class QoS is currently requested, which sometimes cannot be fulfilled in a GEO network. The service may therefore be rejected.

In the meantime, however, the LEO network may be available again. However, the UE will not switch there until a timer for the periodic network scan has expired. If the interaction between coverage interruption and timer is unfavorable, the UE may never reach the LEO network as the timer applies to all networks.

Thus, there may be a demand for improving network selection in devices that rely on satellite mobile communications, particularly in varying orbital networks.

### Summary

This demand is addressed by the subject matter of the appended claims.

According to a first aspect of the present disclosure, it is proposed a UE comprising processing circuitry configured to select a new mobile communication network based on a QoS requirement of a service desired by the UE. For example, the processing circuitry may be configured to select a new mobile communication network if a QoS of a service desired by the UE is unavailable in a current mobile communication network the UE is currently registered with. When the QoS of a service desired by the UE is unavailable in the current mobile communication network to which the UE is connected, it implies that the current network cannot meet the specific performance requirements needed for that service to function properly. In this case, it is proposed to initiate a (QoS-triggered) network (re) selection.

In some embodiments, the UE's processing circuitry is configured to scan for the new mobile communication network if the desired service is rejected by a current mobile communication network the UE is currently registered with. When the desired service is rejected by the current mobile communication network that the UE is registered with, it means that the network is unable to accommodate the service request based on its current conditions or policies. This rejection can occur due to several reasons, each impacting how the network and the device handle the service request. For example, the desired service may have specific QoS requirements, such as bandwidth, latency, or reliability, that the network cannot meet under current conditions. For instance, a VoIMS call might require a low-latency connection that the network, perhaps due to congestion or technical constraints, cannot provide.

In some embodiments, the UE's processing circuitry is configured to initiate a network scan if an initialization of the desired service fails due to a non-available QoS class for the desired service in a current mobile network the UE currently camps on. QoS classes define the performance characteristics required by different types of services to operate effectively. These characteristics can include bandwidth, latency, jitter, packet loss rate, and reliability. Different services require different QoS classes based on their sensitivity to delays, the need for continuous connectivity, data throughput demands, etc. For example, conversational voice requires low latency and low jitter to facilitate real-time communication. Streaming video requires high bandwidth and a moderate tolerance for latency but low jitter to ensure smooth playback. Data transfer may tolerate higher latency but requires high bandwidth for efficient operation.

In some embodiments, the UE's processing circuitry is configured to select the new mobile communication network in an idle mode of the UE. When the UE selects a new mobile communication network while in idle mode, it means that the UE has detected a preferable or necessary alternative network to the one it is currently registered with, and it switches to this new network to improve service quality. Idle mode refers to a state in which the UE is not actively engaged in a voice call or data transmission. Despite being "idle," the device continuously monitors the network, receives paging messages, and maintains registration with the network for incoming calls or data. While in idle mode, the UE may scan for new networks. This scanning may include checking signal strength, network priority, and other parameters that may influence network selection.

In some embodiments, the UE's processing circuitry is configured to interrupt a connected mode of the UE to perform a network scan for the new mobile communication network. Connected mode refers to a state in which the UE is actively engaged in transmitting or receiving data. This could involve voice calls, data downloads, streaming, or any other form of direct communication with the network. Interrupting the connected mode of the UE to perform a network scan for a new mobile communication network involves temporarily suspending the UE's active data transmission or reception to search for potentially better network options.

In some embodiments, the UE's processing circuitry is configured to set a decreased timer value (e.g., timer value of zero) for initiating a network scan for the new mobile communication network. Setting a decreased timer value, such as a timer value of zero, for initiating a network scan for a new mobile communication network essentially means that the network scan is triggered immediately or with reduced delay.

In some embodiments, the UE's processing circuitry is configured to initiate a background network scan for the new mobile communication network while the UE is connected mode. Initiating a background network scan for the new mobile communication network while the UE is in connected mode refers to a process where the UE searches for other potentially better network options without disrupting its current active data or voice session. Thus, the scan is non-disruptive; it does not interfere with the user's current usage, ensuring seamless service continuity.

In some embodiments, the UE's processing circuitry is configured to inform a user of available mobile communication networks fulfilling the QoS requirement for manual selection of the new mobile communication network. This means that the UE may actively identify and present network options that may meet the QoS requirement of the desired service, allowing the user to choose which network to connect to based on their preferences or needs. Once potential networks are identified, the UE may notify the user. This can be through a notification on the UE's user interface, listing the networks, optionally along with relevant information such as signal strength, expected performance, and perhaps even cost considerations if applicable.

In some embodiments, the UE's processing circuitry is configured to stop a radio resource connection between the UE and a current mobile communication network and to perform a network reselection. Radio Resource Connection (RRC) refers to an established link between the UE and the mobile network, which includes the allocation of network resources (like bandwidth and signal channels) that enable communication and data exchange. Stopping this connection means that the UE will disconnect from the currently used cell or network. The UE disconnects (or stops the RRC) from the current network and initiates a connection setup with the new, selected network.

In some embodiments, the new mobile communication network may have a higher network priority than the current mobile communication network the UE is currently registered with. This may indicate that the new network has been rated or classified as more preferable for connection based on specific criteria set by the network operator or the device's programmed preferences.

In some embodiments, the service desired (requested) by the UE comprises Voice over IP Multimedia Subsystem (VoIMS). VoIMS is a standard for delivering voice communications and multimedia sessions over IP networks like the Internet. VoIMS is part of the larger IMS framework, which is a standardized architecture for telecom operators that enables the delivery of IP multimedia to mobile users. VoIMS is needed for enabling services like VoLTE (Voice over LTE), which is essentially Voice over IMS on LTE networks. VoLTE provides clearer call quality and faster call setup times compared to traditional cellular calls. With the evolution of 5G, VoIMS continues to play a key role in supporting voice services over the new generation of mobile networks, further enhancing capabilities and integrating with new technologies such as network slicing and edge computing.

In some embodiments, the UE's processing circuitry is configured to select a new Non-Terrestrial Network (NTN) based on or triggered by the QoS requirement of the desired service. NTN refers to a network or network component that uses platforms located high above the the earth's surface to provide communication services. These platforms can include satellites or high-altitude platforms (HAPs, such as balloons or airships), and they may be utilized to extend and enhance communication services where terrestrial networks (ground-based networks) are unavailable, unreliable, or uneconomical.

In some embodiments, the UE's processing circuitry is configured to initiate a network scan if an initialization of the desired service fails due to a non-available QoS class for the desired service in a current NTN the UE is currently registered with. The current NTN may be a GEO satellite network and the new NTN may be a LEO or MEO satellite network. LEO or MEO satellite networks may offer a lower latency (e.g., for VoIMS) due to closer proximity to earth.

In some embodiments, the UE is configured to receive availability information indicating an availability of one or more mobile communication networks meeting the QoS requirement of the desired service. The availability information may refer to data or signals that inform whether specific mobile communication networks are accessible and usable for communication purposes at a given location and time. This information may be useful for network selection and continuous service quality. The availability information may comprise orbital parameters of satellites or geographic availability information of NTNs (e.g., LEO or MEO satellite networks).

In some embodiments, the UE is configured to receive the availability information from a current mobile communication network the UE is currently registered with (e.g., GEO satellite network), or from a mobile communication network meeting the QoS requirement of the desired service (e.g., LEO or MEO satellite network).

In some embodiments, the UE is configured to receive the availability information via a broadcast channel. A broadcast channel in a mobile communication network is a type of communication channel that is used by network base stations (such as cell towers, satellites, or HAPs) to transmit common information to all mobile devices (UEs) within a cell or network coverage area. This information is not directed to any specific UEs but is available to any UE that can receive the broadcast.

In some embodiments, the availability information comprises ephemeris data of satellites of the one or more mobile networks meeting the QoS requirement of the desired service. Ephemeris data refers to navigational information that describes the precise orbit and position of a satellite in space at any given time. Ephemeris data includes detailed parameters that define the satellite's orbit, such as its semi-major axis, eccentricity, inclination, right ascension of the ascending node, argument of perigee, and the mean anomaly at a specific epoch. These parameters may help predict the satellite's path around the earth and thus its availability for communications.

According to a further aspect of the present disclosure, it is proposed a method including selecting a new mobile communication network (e.g., a LEO or MEO satellite network) if a QoS of a service desired by the UE is unavailable in a current mobile communication network (e.g., a GEO satellite network) the UE is currently registered with.

According to a further aspect of the present disclosure, it is proposed an infrastructure component of a mobile communication network. The infrastructure component may refer to physical and software-based equipment and systems that are necessary to operate and manage the mobile communication network (i.e., that make up the network environment). These components may enable the mobile communication network to provide voice, data, and multimedia services to mobile devices (UEs), such as smartphones, tablets, and other connected devices. Infrastructure components include base stations/cell sites, satellites, HAPs, core network, Radio Access Network (RAN), backhaul, or Operational and Business Support Systems (OSSBSS). The proposed infrastructure component comprises processing circuitry configured to transmit, to a UE, availability information indicating an availability of one or more mobile communication networks meeting a QoS requirement of a service desired by the UE.

The availability information may refer to data or signals that inform whether specific mobile communication networks are accessible and usable for communication purposes at a given location and time. This information may be useful for network selection and continuous service quality.

In some embodiments, the infrastructure component's processing circuitry is configured to transmit the availability information to the UE via a broadcast channel.

In some embodiments, the availability information comprises orbital parameters of satellites or geographic availability information of NTNs (e.g., LEO or MEO satellite networks). For example, the availability information may comprise ephemeris data of satellites of one or more NTNs (e.g., a LEO or MEO satellite network) meeting the QoS requirement of the desired service.

In some embodiments, the infrastructure component is an infrastructure component of a GEO satellite network (e.g., a GEO satellite), and the one or more mobile communication networks meeting the QoS requirement comprise a LEO or MEO satellite network.

According to yet a further aspect of the present disclosure, it is proposed method for an infrastructure component of a mobile communication network. The method includes transmitting, to a UE, information indicating an availability of one or more mobile communication networks (e.g., a LEO or MEO satellite network) meeting a QoS requirement of a service desired by the UE.

According to yet a further aspect of the present disclosure, it is proposed a UE comprising processing circuitry configured to receive, from an infrastructure component of a mobile communication network, availability information indicating an availability of one or more mobile communication networks meeting a QoS requirement of a service desired by the UE.

In some embodiments, the UE is configured to receive the availability information from a current mobile communication network the UE is currently registered with (e.g., GEO satellite network), or from a mobile communication network meeting the QoS requirement of the desired service (e.g., LEO or MEO satellite network).

In some embodiments, the UE is configured to receive the availability information via a broadcast channel.

In some embodiments, the availability information comprises ephemeris data of satellites of the one or more mobile networks meeting the QoS requirement of the desired service.

In some embodiments, the UE's processing circuitry is further configured to select a new mobile communication network based on or triggered by a QoS requirement of a service desired by the UE.

In some embodiments, the UE's processing circuitry is configured to scan for the new mobile communication network if the desired service is rejected by a current mobile communication network the UE is currently registered with.

In some embodiments, the UE's processing circuitry is configured to initiate a network scan if an initialization of the desired service fails due to a non-available QoS class for the desired service in a current mobile network the UE currently camps on.

In some embodiments, the UE's processing circuitry is configured to select the new mobile communication network in an idle mode of the UE.

In some embodiments, the UE's processing circuitry is configured to interrupt a connected mode of the UE to perform a network scan for the new mobile communication network.

In some embodiments, the UE's processing circuitry is configured to set a decreased timer value (e.g., zero) for initiating a network scan for the new mobile communication network.

In some embodiments, the UE's processing circuitry configured to initiate a background network scan for the new mobile communication network while the UE is connected mode.

In some embodiments, the UE's processing circuitry is configured to inform a user of available mobile communication networks fulfilling the QoS requirement for manual selection of the new mobile communication network.

In some embodiments, the UE's processing circuitry is configured to stop a radio resource connection between the UE and a current mobile communication network and to perform a network reselection based on available mobile communication networks.

In some embodiments, the service desired by the UE comprises Voice over IP Multimedia Subsystem (VoIMS).

In some embodiments, the UE's processing circuitry is configured to select a new Non-Terrestrial Network (NTN) based on the QoS requirement of the desired service.

In some embodiments, the UE's processing circuitry is configured to initiate a network scan if an initialization of the desired service fails due to a non-available QoS class for the desired service in a current NTN the UE is currently registered with.

In some embodiments, the current NTN is a GEO satellite network and the new NTN comprises a LEO or MEO satellite network.

According to yet a further aspect of the present disclosure, it is proposed a method for UE, the method including receiving, from an infrastructure component of a mobile communication network, availability information indicating an availability of one or more mobile communication networks meeting a QoS requirement of a service desired by the UE.

It will be readily apparent to one skilled in the art that various of the above-mentioned embodiments may be combined or modified without departing from the spirit and scope of the disclosure.

### Brief description of the Figures

Some examples of apparatuses and/or methods will be described in the following by way of example only, and with reference to the accompanying figures, in which
- Fig. 1: schematically illustrates a mobile communications system including non-terrestrial networks;
- Fig. 2: illustrates a flowchart of a method for a UE in accordance with an embodiment of the present disclosure;
- Fig. 3: illustrates a flowchart comprising QoS-triggered network (re)selection in accordance with an embodiment of the present disclosure;
- Fig. 4A: illustrates a flowchart of a method of providing availability information by an infrastructure component in accordance with an embodiment of the present disclosure; and
- Fig. 4B: illustrates a flowchart of a method of a UE obtaining availability information from an infrastructure component in accordance with an embodiment of the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

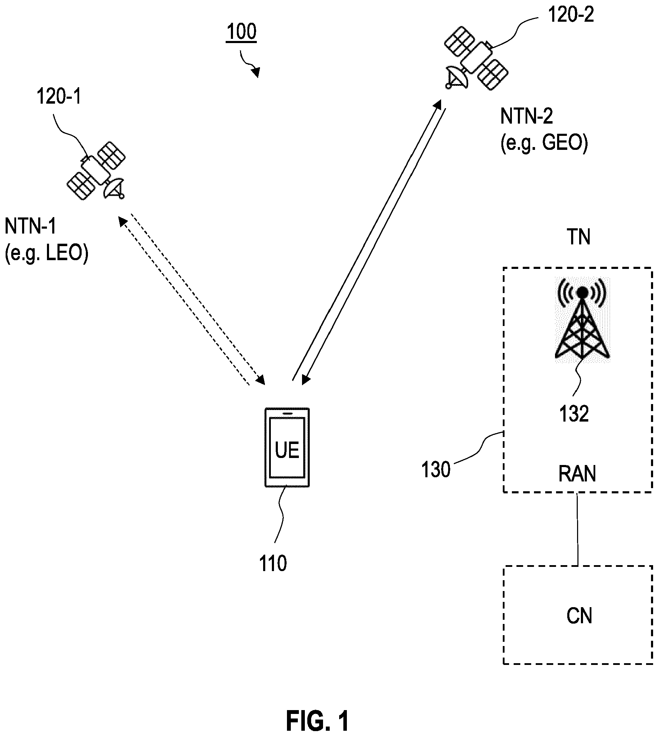

Fig. 1 schematically illustrates an example network 100, according to various aspects discussed herein. Example network 100 may include one or more UEs 110, one or more first satellites 120-1 forming a first non-terrestrial network NTN-1, and one or more second satellites 120-2 forming a second NTN-2. A terrestrial network (TN) also included by example network 100 comprises a radio access network (RAN) 130 including one or more RAN nodes 132, and a core network (CN). The satellites 120 (e.g., of a global navigation satellite system (GNSS)) may be in communication with UE 110 and/or and RAN 130.

The systems and devices of example network 100 may operate in accordance with one or more communication standards, such as 2^{nd} generation (2G), 3^{rd} generation (3G), 4^{th} generation (4G) (e.g., long-term evolution (LTE)), and/or 5^{th} generation (5G) (e.g., new radio (NR)) communication standards of the 3^{rd} generation partnership project (3GPP). Additionally, or alternatively, one or more of the systems and devices of network 100 may operate in accordance with other communication standards and protocols discussed herein, including future versions or generations of 3GPP standards or institute of electrical and electronics engineers (IEEE) standards, for example.

UE 110 may include smartphones (e.g., handheld touchscreen mobile computing devices connectable to one or more wireless communication networks). Additionally, or alternatively, UEs 110 may include other types of mobile or non-mobile computing devices capable of wireless communications, such as personal data assistants (PDAs), pagers, laptop computers, desktop computers, wireless handsets, etc. In some implementations, UEs 110 may include internet of things (IoT) devices (or IoT UEs) that may comprise a network access layer designed for low-power IoT applications utilizing short-lived UE connections.

UE 110 may communicate and establish connections with (e.g., be communicatively coupled) with RAN 130, which may involve one or more wireless channels, each of which may comprise a physical communications interface/layer. In some implementations, UE 110 may be configured with dual connectivity (DC) as a multi-radio access technology (multi-RAT) or multi-radio dual connectivity (MR-DC), where a multiple receive and transmit (Rx/Tx) capable UE may use resources provided by different network nodes that may be connected via non-ideal backhaul (e.g., where one network node provides NR access and the other network node provides either E-UTRA for LTE or NR access for 5G).

RAN 130 may include one or more RAN nodes 132 that enable the connections to be established between UEs 110 and RAN 130. RAN nodes 132 may include network access points configured to provide radio baseband functions for data and/or voice connectivity between users and the network based on one or more of the communication technologies described herein (e.g., 2G, 3G, 4G, 5G, WiFi, etc.). As examples therefore, a RAN node may be an E-UTRAN Node B (e.g., an enhanced Node B, eNodeB, eNB, 4G base station, etc.), a next generation base station (e.g., a 5G base station, NR base station, next generation eNBs (gNB), etc.). RAN nodes 132 may include a roadside unit (RSU), a transmission reception point (TRxP or TRP), and one or more other types of ground stations (e.g., terrestrial access points). In some scenarios, RAN node 132 may be a dedicated physical device, such as a macro-cell base station, and/or a low power (LP) base station for providing femtocells, picocells or other like having smaller coverage areas, smaller user capacity, or higher bandwidth compared to macro-cells. As described below, in some implementations, satellites 120 may operate as base stations (e.g., RAN nodes 132) with respect to UEs 110. As such, references herein to a base station, RAN node 132, etc., may involve implementations where the base station, RAN node 132, etc., is a terrestrial network node and also to implementations where the base station, RAN node 132, etc., is a non-terrestrial network node (e.g., satellite 120).

As shown, RAN 130 may be connected (e.g., communicatively coupled) to CN. CN may comprise a plurality of network elements, which are configured to offer various data and telecommunications services to customers/subscribers (e.g., users of UEs 110) who are connected to the CN via the RAN 130. In some implementations, CN may include an evolved packet core (EPC), a 5G CN, and/or one or more additional or alternative types of CNs.

As shown, example network 100 may include one or more NTNs that may comprise one or more respective satellites 120. Satellites 120 may be in communication with UEs 110 via service link or wireless interface and/or RAN 130 via feeder links or wireless interfaces. In some implementations, satellite 120 may operate as a passive or transparent network relay node regarding communications between UE 110 and the terrestrial network (e.g., RAN 130). In some implementations, satellite 120 may operate as an active or regenerative network node such that satellite 120 may operate as a base station to UEs 110 (e.g., as a gNB of RAN 130) regarding communications between UE 110 and RAN 130. In some implementations, satellites 120 may communicate with one another via a direct wireless interface or an indirect wireless interface (e.g., via RAN 130). Additionally, or alternatively, satellite 120 may include a GEO satellite, MEO, LEO satellite, or another type of satellite. Satellite 120 may also, or alternatively pertain to one or more satellite systems or architectures, such as a global navigation satellite system (GNSS), global positioning system (GPS), global navigation satellite system (GLONASS) , BeiDou navigation satellite system (BDS) , etc. In some implementations, satellites 120 may operate as bases stations (e.g., RAN nodes 132) with respect to UEs 110. As such, references herein to a base station, RAN node 132, etc., may involve implementations where the base station, RAN node 132, etc., is a terrestrial network node and implementation, where the base station, RAN node 132, etc., is a non-terrestrial network node (e.g., satellite 120).

Different types of satellites that can be employed as nodes of NTN networks along with relevant characteristics, in connection with various aspects discussed herein. The different types of satellites include (i) Medium Earth Orbit (MEO) satellites, with an altitude between 7000-25000 km, cell size between 100-1000 km, and round-trip time of approximately 120 ms; (ii) Low Earth Orbit (LEO) satellites, with an altitude between 300-1500 km, cell size between 100-1000 km, and round-trip time of approximately 41.77 ms; (iii) High Altitude Platform Station (HAPS) satellites, with an altitude between 8-50 km, cell size between 5-200 km, and round-trip time of approximately 14 ms; and (iv) Geostationary Orbit (GEO) satellites, with an altitude of 35768 km, cell size between 200-3500 km, and round-trip time of approximately 541.46 ms.

Various embodiments can employ satellites 120 that operate in a transparent mode, forwarding signaling between UE 110 and a RAN node 132, while in other embodiments, part or all of a RAN node 132 can be located at the satellite 120.

Since 5G, satellite networks with 5G NR access have also been increasingly integrated into 5G networks - initially only for messages and IoT data transmission, but lately also for voice telephony. Although LEO and MEO satellites meet the necessary QoS requirements in terms of latency and data transmission rate, they are not continuously available. Due to the constellation, there may be regular interruptions in coverage, e.g. coverage for 20 minutes, then interruption for 40 minutes, then coverage again for 20 minutes, etc. With GEO networks, on the other hand, coverage is constant, but throughput and latency are significantly worse than with LEO or MEO.

UE 110 (e.g., on the high seas) could therefore be deployed with a LEO satellite network (e.g., NTN-1) as the highest-priority mobile communication network and a GEO satellite network (e.g., NTN-2) as a lower-priority mobile communication network. If UE 110 loses the connection to the LEO network (e.g., NTN-1), it may select the GEO network (e.g., NTN-2) or a MEO network as a fallback. If a new communications service is now started, the UE 110 requests a data transmission with certain QoS parameters. For simple data transmission, this is a so-called "best effort" service, which will also be available on GEO network. However, if the service is VoIMS, a conversational class QoS is requested, which sometimes cannot be fulfilled in a GEO network. The service may therefore be rejected.

In the meantime, however, the LEO network (e.g., NTN-1) may be available again. However, the UE 110 will not switch there until a preset timer for periodic network scan has expired. If the interaction between coverage interruption and timer is unfavorable, the UE 110 will never reach the LEO network (e.g., NTN-1) as the timer applies to all networks.

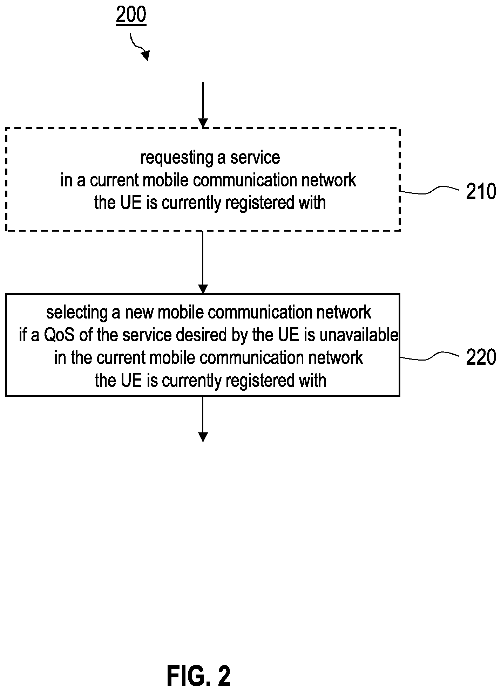

Therefore, the present disclosure proposes - instead of a timer-based network (re-)selection - a QoS-based or -triggered network (re-)selection. The basic principle of the proposed concept is illustrated in Fig. 2.

Fig. 2 shows a flowchart of a method 200 for UE 110. Method 200 includes selecting 220 a new mobile communication network (e.g., LEO network) if a QoS of a service desired or requested by the UE 110 is unavailable in a current mobile communication network (e.g., GEO network) the UE 110 is currently registered with. Prior to selecting 220 the new mobile communication network, method 200 may include requesting 210 the service in the current mobile communication network the UE 110 is currently registered with.

Before the UE 110 can request any service (e.g., VoIMS), it must be registered with the network (e.g., GEO network). The UE may use its SIM card to authenticate itself to the network. This may involve exchanging credentials with the network's authentication server function (AUSF). The UE 110 may send an attach request to the network to gain access to data services. This may be handled by a Mobility Management Entity (MME) in an LTE network or an Access and Mobility Management Function (AMF) in a 5G network.

Once the UE 110 has network access, it may use its IMS credentials (derived from the SIM or provided separately) to register with the IMS core network. This may involve interactions with the IMS entities like the Proxy Call Session Control Function (P-CSCF), Serving Call Session Control Function (S-CSCF), and Home Subscriber Server (HSS). Security associations may be established to ensure that all signaling and voice data will be encrypted and secure.

After successfully registering with both the mobile network and the IMS, the UE 110 may initiate a session using a Session Initiation Protocol (SIP). It may send a SIP INVITE message to the P-CSCF, which may include information about the requested service (e.g., VoIMS). The SIP INVITE may be routed through the IMS network. The S-CSCF may handle session control and may interact with other functional entities like the Application Server (AS) if service-specific behaviors or policies need to be applied.

If the UE 110 fails to register with the IMS network, VoIMS services cannot be initiated. Further, VoIMS requires certain QoS levels to function properly. If the network (e.g., GEO network) cannot guarantee these QoS levels due to congestion or limited resources, the requested service might be degraded or denied.

For example, the service desired or requested by the UE 110 may be VoIMS requiring low latency to ensure high-quality, real-time voice and/or multimedia communications. Latency refers to the delay between a source sending a packet of data and the destination receiving it. For VoIMS and other real-time communication services, the recommended maximum round-trip latency may be generally around 150 milliseconds (ms) or less. This level of latency helps to ensure that voice calls and multimedia sessions are clear and free from disruptive delays. Keeping latency below this threshold may be needed for maintaining the quality of experience for users, preventing issues such as echoing, interruptions, or out-of-sync audio and video.

As discussed above, GEO networks, which position satellites 120-2 35,786 kilometers (about 22,236 miles) above the equator, inherently have higher latency compared to terrestrial networks due to the great distances that signals must travel. The time it takes for a signal to travel from Earth to the satellite 120 and back is determined by the speed of light. For a satellite at about 35,786 kilometers above the surface, the delay on the link between the UE and the satellite is approximately 119 milliseconds (ms). Since the signal needs to travel to the satellite and then back to Earth to reach the core network and the other connection endpoint, the one-way delay is about 238 milliseconds. The same applies for the communication link in the opposite direction. So the total minimum theoretical round-trip latency (from a UE transmitting information to the earliest point in time when it can receive an answer) is about 476 milliseconds. However, this does not account for any additional processing time on the satellite or in the terrestrial infrastructure. Additional delays can occur due to the processing of signals by the satellite 120-2, routing, and any queuing that may happen in the network. These delays can add several milliseconds to the overall latency. In practical terms, total round-trip latencies for GEO satellite networks may range between 500 to 700 milliseconds or more, depending on the network design, the type of traffic, and other technological factors. Due to these latency characteristics, GEO networks are generally not ideal for latency-sensitive applications like VoIMS.

Thus, if UE 110 is currently registered with a GEO network (e.g., NTN-2), UE 110 may select another mobile communication network since a latency requirement for a VoIMS service desired by the UE 110 is unavailable in the GEO network. The other mobile communication network may be another NTN, e.g., a MEO network, a LEO network, a HAPS network, or a terrestrial mobile communications network (PLMN).

MEO networks may offer lower latency compared to GEO networks due to their closer proximity to Earth. MEO satellites typically orbit at around 8,000 to 20,000 kilometers (approximately 5,000 to 12,500 miles). The reduced distance means that signals have less distance to travel compared to GEO, reducing the overall latency. The speed of light in a vacuum is about 299,792 kilometers per second, which implies a shorter travel time for signals. For a satellite at an average altitude of 10,000 kilometers, the one-way delay due to the distance would be approximately 66 milliseconds. Given the one-way delay, the theoretical minimum round-trip latency (ignoring any processing or other delays) would be about 132 milliseconds for satellites at 10,000 kilometers altitude. When one includes processing delays on the satellite, additional signal routing and handling delays on the ground, total round-trip latencies may range between 150 to 200 milliseconds, which is significantly better than what is achieved with GEO satellites and may be acceptable for a VoIMS service.

LEO networks provide the lowest latency among satellite communication systems due to their proximity to the Earth. LEO satellites orbit at altitudes ranging from about 180 to 2,000 kilometers (approximately 112 to 1,242 miles). This close proximity significantly reduces the signal travel time. Given that LEO satellites operate at much lower altitudes compared to GEO or MEO satellites, the signal travel time is considerably reduced. For example, for a satellite at an altitude of 500 kilometers, the one-way signal travel time from a UE to Earth via a LEO satellite is roughly 3.33 milliseconds. The theoretical minimum round-trip latency, simply considering the time for light to travel twice to the satellite and back, would be around 6.67 milliseconds for a satellite at 500 kilometers altitude. When including processing delays on the satellite and any network infrastructure processing delays, practical round-trip latencies for LEO networks are typically in the range of 20 to 40 milliseconds. This can vary based on the specific network architecture and technologies used. LEO networks are particularly promising for real-time applications that demand low latency, such as voice communications, gaming, and certain types of real-time financial transactions. The reduced latency also makes LEO networks competitive with terrestrial broadband services, particularly in regions where ground infrastructure is lacking or inadequate (e.g., on the ocean).

Selecting 220 the new mobile communication network may include the UE 110 scanning for the new non-terrestrial or terrestrial communication network if the desired service (e.g., VoIMS) is rejected by a current mobile communication network (e.g., GEO network) the UE 110 is currently registered with. For example, the UE 110 may initiate a network scan if an initialization of the desired service (e.g., VoIMS) fails due to a non-available QoS class for the desired service (e.g., VoIMS) in a current mobile network the UE is currently registered with.

In mobile communication networks, particularly those using 4G LTE and 5G technologies, specific QoS classes may be defined to handle different levels of latency and other service quality parameters. These classes may be used for managing and prioritizing traffic to ensure that applications requiring low latency and high reliability, such as voice over LTE (VoLTE) and real-time video streaming, perform optimally. In LTE networks, QoS may be managed using QoS Class Identifiers (QCIs) which are standardized by the 3GPP (3rd Generation Partnership Project). Each QCI value corresponds to a specific level of QoS, defining priority, packet delay budget (latency), and packet error loss rate.
- QCI 1: Used for real-time voice with a packet delay budget of 100 ms.
- QCI 2 and QCI 3: Employed for real-time video (conversational video) with packet delay budgets of 150 ms and 50 ms, respectively.
- QCI 4: Used for buffered streaming video with a delay budget of 300 ms.

With 5G, QoS handling has evolved to support a wider range of applications, including enhanced Mobile Broadband (eMBB) and those demanding ultra-reliable and low-latency communications (URLLC). In 5G, QoS is more dynamic and tailored to the needs of different types of network traffic. Similar to QCIs in LTE, SQIs may be used to define the characteristics of network traffic. SQIs may be more granular and tailored for a variety of 5G services, comprising, e.g., Ultra-Reliable Low Latency Communication (URLLC). This service category in 5G is specifically designed for applications requiring extremely low latency and high reliability, such as autonomous vehicles, industrial automation, and certain types of remote surgeries.

If the establishment of the desired service by the UE 110 fails due to an unavailable QoS, the UE 110 may preferably immediately perform a network scan (e.g., in idle mode network scan) and, if necessary, select an available, higher-priority network. The UE behavior may be configurable, preferably by a parameter on the USIM - e.g., traditional behavior or immediate scan. The scan may be triggered by setting the current timer value to 0 (= expired). Thus, selecting 220 the new mobile communication network may include the UE 110 setting a decreased timer value (e.g., zero) for initiating the network scan for the new mobile communication network offering the service desired or requested by the UE 110. By decreasing the time value vis-à-vis a preset timer value, the network scan for the new network may be triggered immediately or at least with reduced delay.

The timer value for the periodic reselection could be made dependent on the access network. Currently, there is one value, valid for all networks. The interpretation of the value depends on the type of UE. However, since the problem is primarily to be expected with GEO satellite access, a separate timer value per access technology (NR, LEO, MEO, GEO), or a different interpretation of the value if the UE 110 is connected via GEO, could be used to shorten the period for the search in the GEO network and thus enable the UE to select a better network more quickly.

Selecting 220 the new mobile communication network may include the UE 110 selecting the new mobile communication network during idle mode of the UE 110. In idle mode, the UE 110 maintains minimal activity while not engaged in any active communication sessions. In idle mode, the UE 110 remains registered with the current network (e.g., GEO network) but does not maintain a continuous, active connection to a cell. It may monitor control channels of a serving cell and may check for better cells from the same network or different networks. If the new non-terrestrial or terrestrial communication network offering the desired service (e.g., VoIMS) is available, the UE may perform the selection of the new network during idle mode. This may be done even if a signal strength of the new non-terrestrial or terrestrial communication network is lower than that of the current network.

If the UE 110 is in connected mode, e.g. because a (best-effort) data transmission is running, selecting 220 the new mobile communication network may include the UE 110 initiate a background network scan for the new mobile communication network while the UE 110 is in connected mode. UE 110 may inform a user of available (higher priority) mobile communication networks fulfilling the requested QoS requirement for manually selecting the new mobile communication network. Alternatively, the UE 100 may automatically interrupt or stop the existing RRC connection and perform a network reselection based on the results of the background network scan.

If no background scan is possible in connected mode, selecting 220 the new mobile communication network may include the UE 110 interrupting the connected mode (e.g., best effort service) of the UE to perform a network scan for the new mobile communication network offering the service desired or requested by the UE 110. Alternatively, the network reselection may take place when the UE 110 switches from connected mode back to idle mode (i.e. the current transmission is terminated).

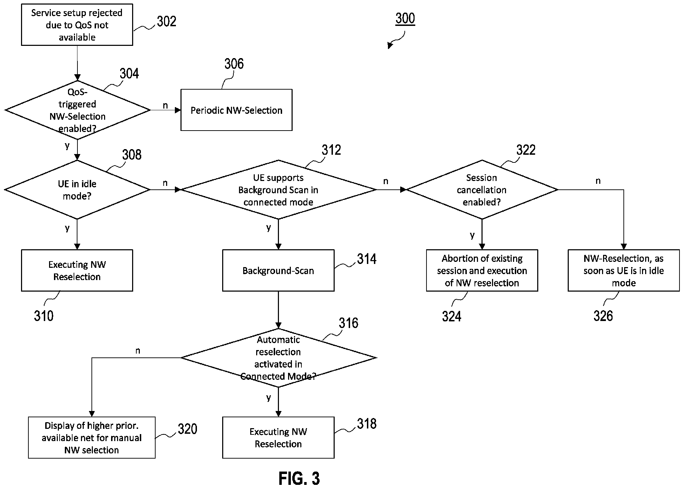

**Fig. 3** illustrates a more detailed flowchart 300 of the proposed concept of QoS-triggered network selection.

At 302, the service requested by the UE 110 is rejected as the desired service is unavailable in the current network (e.g., GEO network) the UE 110 is currently registered with. At 304, the UE 110 checks whether QoS-triggered network selection is enabled at the UE 110. If QoS-triggered network selection is not enabled, conventional periodic network selection may be performed at 306. If QoS-triggered network selection is enabled, it may be checked at 308 whether the UE 110 is currently in idle mode. If yes, a new mobile communication network offering the service desired by the UE may be selected during idle mode at 310. If the UE 110 is currently not in idle mode, it may be checked at 312 whether the UE 110 supports background network scan for new mobile communication network(s) while the UE 110 is connected mode.

If the UE does support background network scan for new mobile communication network(s) while the UE 110 is connected mode (e.g., as UE 110 comprises multiple transceiver chains), the background network scan may be performed at 314. At 316, it may be checked whether automatic network reselection in connected mode is activated at the UE 110. If yes, automatic reselection of the new network may be performed at 318. If automatic network reselection in connected mode is not activated or available at the UE 110, available mobile communication networks may be displayed to the user at 320 for manual selection of the new mobile communication network.

If check 312 reveals that the UE 110 does not support background network scan for new mobile communication network(s) while the UE 110 is connected mode (e.g., as UE 110 comprises only one single transceiver chain), it may be checked at 322 whether connected mode interruption for network scan and/or reselection is enabled at the UE 110. If yes, a currently ongoing radio resource connection may be stopped for performing a network scan and/or the selection of the new mobile communication network offering the service desired or requested by the UE 110 at 324. If the UE 110 does not support connected mode interruption, network reselection may be initiated and performed in idle mode at 326.

Embodiments of the present disclosure also propose an option to provide availability information indicating an availability of one or more mobile communication networks meeting the QoS requirement of the desired service (e.g., VoIMS). The availability information may be provided alternatively or additionally to the described network scans for the one or more mobile communication networks meeting the QoS requirement of the desired service. That is, network (re-)selection may be performed based on the availability information alternatively or additionally to the described network scans.

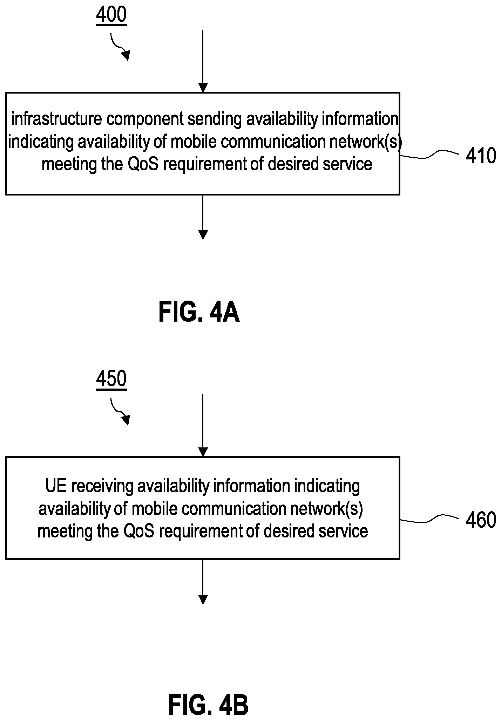

**Fig. 4A** illustrates a flowchart of a method 400 for an infrastructure component of a mobile communication network. The infrastructure component may comprise a RAN node 132 of a PLMN, satellite 120-1, 120-2, or HAP of a NTN, for example.

Method 400 comprises transmitting 410, from the infrastructure component 120 to the UE 110, the availability information indicating an availability of one or more mobile communication networks (e.g., LEO network NTN-1) meeting a QoS requirement of a service desired by the UE 110. The availability information may refer to data or signals that inform whether specific mobile communication networks (e.g., LEO network NTN-1) are accessible and usable for communication purposes at a given location and time.

As shown in **Fig. 4B****,** illustrating a flowchart of a method 500 for the UE 110, the UE 110 may be configured to receive, from the infrastructure component, the availability information of the one or more mobile communication networks meeting the QoS requirement of the service desired by the UE.

The availability information of the one or more mobile communication networks meeting the QoS requirement of the desired service may be provided from the current mobile communication network the UE is currently registered with. For example, the availability information (e.g., on the LEO network) may be provided by the GEO network (e.g., NTN-2) so that the UE 110 can switch back from the GEO network to the LEO network (e.g., NTN-1) as soon as the latter is available. The GEO network may broadcast the availability information related to the availability of the LEO network to the UE 110 via a broadcast channel. For example, the GEO network may broadcast ephemeris data of satellites 120 of the LEO network (e.g., NTN-1). The GEO network may broadcast so-called two-line elements (or similar information) of the satellites 120-1 of the LEO network on a broadcast channel for the LEO satellites. Such information may allow the UE 110 to calculate for its own location when a LEO satellite 120-1 should be visible and (automatically) trigger a network reselection at this time. Two-Line Element sets (TLEs) are a widely used format for providing the orbital parameters of Earth-orbiting objects, such as satellites. A TLE provides information needed to predict the position and velocity of a satellite at any given time, based on a simplified model of the Earth's shape and gravitational effects. Each TLE consists of two lines of data (after the title line) that include:
- Line 1: Contains the satellite's catalog number (as assigned by the US Space Command), its classification (classified or unclassified), its launch year and number, a piece of the launch identification, and details about its epoch (the exact date and time the elements were valid).
- Line 2: Includes the satellite's inclination, right ascension of the ascending node, eccentricity, argument of perigee, mean anomaly, mean motion, and a checksum.

However, TLEs may only be practicable with a manageable number of LEO satellites 120-1. With a higher LEO satellite density and therefore better availability, the GEO network could alternatively directly broadcast a list of availability information, e.g. indicating a geographical center and radius where LEO coverage should currently be available.

Alternatively, the availability information of the one or more mobile communication networks meeting the QoS requirement of the desired service may be provided by the mobile communication network(s) meeting the QoS requirement of the desired service.

For example, individual LEO satellites 120-1 themselves could send out (e.g., broadcast) variable availability information for the respective position over which they are currently located. For example, coverage at the current location until time xy, then outage until yz, then coverage again. The information may take into account the constellation of the network. To receive the information, UEs 110 may be able to find the LEO network independently, at least initially.

Although the detailed description focuses on QoS-triggered network (re-)selection between different non-terrestrial networks, the skilled person having benefit from the present disclosure will appreciate that the proposed QoS-triggered network (re-)selection can be applied to any networks, also including terrestrial networks. Further, the skilled person will appreciate that various of the above-mentioned embodiments may be combined or modified without departing from the spirit and scope of the disclosure.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A user equipment (110), UE, comprising
processing circuitry configured to select a new mobile communication network based on a Quality of Service, QoS, requirement of a service desired by the UE (110).

2. The UE (110) of claim 1, wherein the processing circuitry is configured to scan for the new mobile communication network if the desired service is rejected by a current mobile communication network the UE is currently registered with.

3. The UE (110) of claim 1 or 2, wherein the processing circuitry is configured to initiate a network scan if an initialization of the desired service fails due to a non-available QoS class for the desired service in a current mobile network the UE is currently registered with.

4. The UE (110) of any one of the previous claims, wherein the processing circuitry is configured to select the new mobile communication network in an idle mode of the UE.

5. The UE (110) of any one of the previous claims, wherein the processing circuitry is configured to set a decreased timer value for initiating a network scan for the new mobile communication network.

6. The UE (110) of any one of the previous claims, wherein the processing circuitry is configured to interrupt a connected mode of the UE to perform a network scan for the new mobile communication network.

7. The UE (110) of any one of the previous claims, wherein the processing circuitry is configured to initiate a background network scan for the new mobile communication network while the UE (110) is connected mode.

8. The UE (110) of claim 7, wherein the processing circuitry is configured to inform a user of available mobile communication networks fulfilling the QoS requirement for manual selection of the new mobile communication network.

9. The UE (110) of claim 7 or 8, wherein the processing circuitry is configured to stop a radio resource connection between the UE (110) and a current mobile communication network and to perform a network reselection based on available mobile communication networks.

10. The UE (110) of any one of the previous claims, wherein the service desired by the UE comprises Voice over IP Multimedia Subsystem, VoIMS.

11. The UE (110) of any one of the previous claims, wherein the processing circuitry is configured to select a new Non-Terrestrial Network, NTN, based on the QoS requirement of the desired service.

12. The UE (110) of claim 11, wherein the processing circuitry is configured to initiate a network scan if an initialization of the desired service fails due to a non-available QoS class for the desired service in a current NTN the UE (110) is currently registered with.

13. The UE (110) of claim 12, wherein the current NTN is a GEO satellite network and the new NTN comprises a LEO or MEO satellite network.

14. The UE (110) of any one of the previous claims, wherein the UE (110) is configured to receive availability information comprising orbital parameters indicating an availability of one or more NTNs meeting the QoS requirement of the desired service.

15. The UE (110) of claim 14, wherein the UE (110) is configured to receive the availability information from a current mobile communication network the UE is currently registered with, or from a mobile communication network meeting the QoS requirement of the desired service.
